# EUROPEAN PATENT APPLICATION

(11) **EP 4 475 380 A1**
(43) Date of publication of application: **11.12.2024**
(21) Application number: 23205762.0
(22) Date of filing: 25.10.2023
(51) Int. Cl.: H02J 7/00, H01M 10/44

(54) **CHARGING TEMPERATURE RISE ADJUSTMENT METHOD AND APPARATUS, AND STORAGE MEDIUM**

(30) Priority: 08.06.2023 CN 202310678327
(71) Applicant: Beijing Xiaomi Mobile Software Co., Ltd., Beijing 100085 (CN)
(72) Inventor: LIN, Jiashuo, Beijing 100085 (CN)
(74) Representative: dompatent von Kreisler Selting Werner - Partnerschaft von Patent- und Rechtsanwälten mbB

(57) **Abstract**

A charging temperature rise adjustment method includes: in response to detecting that a terminal is in a charging state, estimating (S101) a charging temperature rise sensitive threshold of a user of the terminal according to historical charging action data of the terminal; and adjusting (S102) a charging temperature rise of the terminal according to the charging temperature rise sensitive threshold.

## Description

### FIELD

The present invention relates to a field of terminals, and particularly to a charging temperature rise adjustment method, a charging temperature rise adjustment apparatus and a storage medium.

### BACKGROUND

With a rapid development of related technologies in the charging field, a charging performance of a terminal is greatly improved, and even the performance is excessive, so that a charging strategy design of the terminal, such as a mobile phone, or the like, gradually changes from an extensive improvement of a charging power to a fine improvement of an actual charging experience of a user, especially an improvement of a charging temperature rise experience.

In the related art, the temperature rise management and control are usually performed for a current charging action, such as the immobilized charging scenario management and control or the general charging temperature rise standard management and control, so that charging temperature rise requirements of different users cannot be met.

### SUMMARY

In order to overcome the problems in the related art, the present invention provides a charging temperature rise adjustment method, a charging temperature rise adjustment apparatus and a storage medium.

According to a first aspect of embodiments of the present invention, there is provided a charging temperature rise adjustment method, including: in response to detecting that a terminal is in a charging state, estimating a charging temperature rise sensitive threshold of a user of the terminal according to historical charging action data of the terminal; and adjusting a charging temperature rise of the terminal according to the charging temperature rise sensitive threshold.

Optionally, the historical charging action data includes temperature rise sensitive stress action data.

Optionally, the estimating the charging temperature rise sensitive threshold of the user of the terminal according to the historical charging action data of the terminal includes: determining whether the temperature rise sensitive stress action data meets an entry-into-force condition of a temperature rise sensitivity habit; and in response to determining that the temperature rise sensitive stress action data meets the entry-into-force condition, estimating the charging temperature rise sensitive threshold of the user of the terminal according to the temperature rise sensitive stress action data.

Optionally, the estimating the charging temperature rise sensitive threshold of the user of the terminal according to the historical charging action data of the terminal further includes: in response to determining that the temperature rise sensitive stress action data does not meet the entry-into-force condition, determining whether a current charging action belongs to a temperature rise sensitive stress action according to current charging action data of the terminal; and in response to determining that the current charging action belongs to the temperature rise sensitive stress action, determining the current charging action data as the temperature rise sensitive stress action data.

Optionally, the current charging action data includes at least one of an initial electric quantity, a termination electric quantity, a charging duration, a termination temperature, a temperature rise magnitude, and a first maximum temperature.

Optionally, the current charging action data comprises an initial electric quantity, a termination electric quantity, a charging duration, a termination temperature, a temperature rise magnitude, and a first maximum temperature; the determining whether the current charging action belongs to the temperature rise sensitive stress action according to the current charging action data of the terminal includes: determining that the current charging action belongs to the temperature rise sensitive stress action, in response to determining that the current charging action data of the terminal meets the following conditions: the initial electric quantity is less than or equal to a preset electric quantity; the termination electric quantity is less than a full electric quantity of the terminal; the charging duration is longer than or equal to a preset duration; the temperature rise magnitude is greater than or equal to a preset magnitude; the first maximum temperature is higher than or equal to a first preset temperature threshold; and a difference between the first maximum temperature and the termination temperature is less than or equal to a second preset temperature threshold.

Optionally, the temperature rise sensitive stress action data includes a second maximum temperature; the estimating the charging temperature rise sensitive threshold of the user of the terminal according to the temperature rise sensitive stress action data includes: determining an average value of the second maximum temperatures in every temperature rise sensitive stress action data as the charging temperature rise sensitive threshold.

Optionally, the temperature rise sensitive stress action data includes a second maximum temperature; the estimating the charging temperature rise sensitive threshold of the user of the terminal according to the temperature rise sensitive stress action data includes: dividing the second maximum temperatures in every temperature rise sensitive stress action data into a plurality of first intervals; and determining a median value of the second maximum temperatures falling in a first target interval as the charging temperature rise sensitive threshold. The first target interval is an interval of the plurality of first intervals including the most second maximum temperatures.

Optionally, the temperature rise sensitive stress action data includes an initial temperature and a second maximum temperature; the estimating the charging temperature rise sensitive threshold of the user of the terminal according to the temperature rise sensitive stress action data includes: dividing the initial temperatures in every temperature rise sensitive stress action data into a plurality of second intervals; and determining an average value of the second maximum temperatures in target temperature rise sensitive stress action data as the charging temperature rise sensitive threshold. The target temperature rise sensitive stress action data is the temperature rise sensitive stress action data with the initial temperature falling in a second target interval, and the second target interval is an interval of the plurality of second intervals including an initial temperature of a current charging action of the terminal.

Optionally, the adjusting the charging temperature rise of the terminal according to the charging temperature rise sensitive threshold includes: determining a maximum temperature threshold of a current charging action according to the charging temperature rise sensitive threshold; and updating a charging strategy of the terminal according to the maximum temperature threshold, and adjusting the charging temperature rise of the terminal according to the updated charging strategy.

Optionally, the updating the charging strategy of the terminal according to the maximum temperature threshold includes one of: updating a maximum charging power of the terminal according to a difference between the maximum temperature threshold and an original maximum temperature threshold in the charging strategy; updating a current division ratio of each charging channel in the terminal according to the maximum temperature threshold; and updating a working mode of a charging chip of each charging channel in the terminal according to the maximum temperature threshold.

According to a second aspect of the embodiments of the present invention, there is provided a charging temperature rise adjustment apparatus, including: a processor; and a memory for storing instructions executable by the processor. The processor is configured to run the executable instructions to implement the steps of the charging temperature rise adjustment method according to the first aspect of the present invention.

According to a third aspect of the embodiments of the present invention, there is provided a computer-readable storage medium having computer program instructions stored thereon. When executed by a processor, the program instructions are configured to implement the steps of the charging temperature rise adjustment method according to the first aspect of the present invention.

The technical solution according to the embodiments of the present invention may have the following beneficial effects: the temperature rise sensitivity learning is performed on historical charging actions of the terminal, so that the charging temperature rise sensitive threshold of the user is automatically estimated, and hence the charging temperature rise of the terminal is adjusted according to the charging temperature rise sensitive threshold, so as to meet the charging temperature rise expectation of the user, realize an intelligent and personalized charging temperature rise logic, and improve flexibility of charging control and the comprehensive charging experience under a diversified complex scenario.

It is to be understood that both the foregoing general description and the following detailed description are illustrative and explanatory only and are not intended to limit the present invention.

### BRIEF DESCRIPTION OF THE DRAWINGS

The accompanying drawings, which are incorporated in and constitute a part of the present specification, illustrate embodiments consistent with the present invention and, together with the description, serve to explain the principles of the present invention.
Fig. 1 shows a flow chart of a charging temperature rise adjustment method according to an illustrative embodiment of the present invention.
Fig. 2 shows a flow chart of a charging temperature rise adjustment method according to another illustrative embodiment of the present invention.
Fig. 3 shows a block diagram of a charging temperature rise adjustment apparatus according to an illustrative embodiment of the present invention.
Fig. 4 shows a block diagram of a charging temperature rise adjustment apparatus according to an illustrative embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements, unless otherwise represented. The implementations described in the following illustrative embodiments do not represent all implementations consistent with the present invention. Instead, they are merely examples of an apparatus and a method consistent with some aspects related to the present invention as recited in the appended claims.

It should be noted that all actions of acquiring signals, information or data in the present invention are performed under the premise of complying with the corresponding data protection regulations and policies of the country where the present invention is located and in a case of obtaining an authorization given by an owner of a corresponding apparatus.

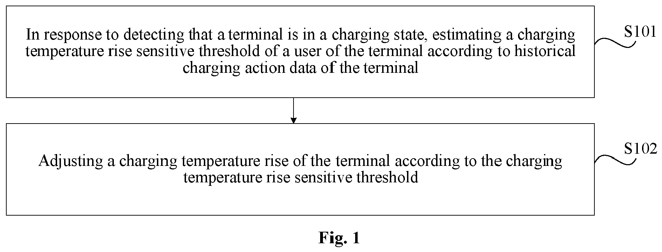

Fig. 1 shows a flow chart of a charging temperature rise adjustment method according to an illustrative embodiment, and as shown in Fig. 1, the charging temperature rise adjustment method is used in a terminal and includes the following steps.

At step S101, in response to detecting that the terminal is in a charging state, a charging temperature rise sensitive threshold of a user of the terminal is estimated according to historical charging action data of the terminal.

In an embodiment of the present invention, some users may worry that due to an excessively high temperature of the terminal during charging, a battery life is affected, and a safety risk exists. Therefore, the users may pay attention to a temperature change of a battery during charging, and a charging experience of the user may be reduced due to a large temperature rise. Charging temperature rise sensitivity refers to sensitivity of the user to the temperature rise of the terminal (for example, a mobile phone) during charging, and the sensitivity of each user is different. The charging temperature rise sensitive threshold is a sensitive point of the user for the temperature rise of the terminal. That is, when the temperature reaches the charging temperature rise sensitive threshold, the user is sensitive, and the experience of this charging action is poor. In other words, the charging temperature rise sensitive threshold may be predetermined or calculated limit of temperature rise, beyond which the user may experience discomfort or dissatisfaction, or which may indicate a risk to the device.

When it is detected that the terminal is in the charging state (that is, the terminal is being charged but not fully charged), the sensitive point of the user for the temperature rise of the terminal is estimated according to the historical charging action data of the terminal, so that a corresponding temperature rise adjustment measure is taken according to the sensitive point during charging, so as to improve the charging experience of the user.

At step S102, a charging temperature rise of the terminal is adjusted according to the charging temperature rise sensitive threshold.

In an embodiment of the present invention, the charging temperature rise of the terminal is adjusted according to the estimated charging temperature rise sensitive threshold, so that a temperature rise degree of the terminal in a current charging action meets an expectation of the user, thus improving the charging experience of the user.

The technical solution according to the embodiments of the present invention may have the following beneficial effects: the temperature rise sensitivity learning is performed on historical charging actions of the terminal, so that the charging temperature rise sensitive threshold of the user is automatically estimated, and hence the charging temperature rise of the terminal is adjusted according to the charging temperature rise sensitive threshold, so as to meet the charging temperature rise expectation of the user, realize an intelligent and personalized charging temperature rise logic, and improve flexibility of charging control and the comprehensive charging experience under a diversified complex scenario.

In an implementation, the historical charging action data may include temperature rise sensitive stress action (SSAct) data.

In an embodiment of the present invention, the temperature rise sensitive stress action refers to a stress action generated because the user is sensitive to and dissatisfied with the temperature rise when the terminal is charged, for example, an interruption of the current charging action, or the like. The temperature rise sensitive stress action data refers to charging state data of the current charging action of the terminal when the user generates the temperature rise sensitive stress action, and specifically includes a charging date, an initial electric quantity, a termination electric quantity, a charging duration, an initial temperature, a termination temperature, a maximum temperature, a temperature rise magnitude, or the like. It may refer to historical data representing previous instances where the device temperature rise during charging has triggered a stress response or negative feedback from the user or device.

In an implementation, the step S101 may include: determining whether the temperature rise sensitive stress action data meets an entry-into-force condition of a temperature rise sensitivity habit; and if the temperature rise sensitive stress action data meets the entry-into-force condition, estimating the charging temperature rise sensitive threshold of the user of the terminal according to the temperature rise sensitive stress action data.

In an embodiment of the present invention, when it is detected that the terminal is in the charging state, it is first determined whether the temperature rise sensitive stress action data in the historical charging action data meets the entry-into-force condition of the temperature rise sensitivity habit, that is, it is judged whether the existing temperature rise sensitive stress action data is enough to analyze the temperature rise sensitivity habit of the user. If the entry-into-force condition is met, the charging temperature rise sensitive threshold of the user for the terminal is estimated by using such data. For example, the entry-into-force condition may be that the number of pieces of the temperature rise sensitive stress action data in the historical charging action data is greater than a preset number (for example, 5).

In an implementation, the step S101 may further include: if the temperature rise sensitive stress action data does not meet the entry-into-force condition, determining whether the current charging action belongs to a temperature rise sensitive stress action according to current charging action data of the terminal; and if the current charging action belongs to the temperature rise sensitive stress action, determining the current charging action data as the temperature rise sensitive stress action data.

In an embodiment of the present invention, when the temperature rise sensitive stress action data in the historical charging action data does not meet the entry-into-force condition of the temperature rise sensitivity habit, that is, the temperature rise sensitivity habit of the user cannot be analyzed according to the existing temperature rise sensitive stress action data, and the charging temperature rise sensitive threshold of the user of the terminal cannot be estimated according to the existing temperature rise sensitive stress action data. In this case, it may be considered whether the current charging action data is added into the historical charging action data as the temperature rise sensitive stress action data.

Specifically, it may be first judged whether the current charging action belongs to the temperature rise sensitive stress action according to the current charging action data of the terminal; and if the current charging action belongs to the temperature rise sensitive stress action, relevant charging data (i.e., the current charging action data) in the current charging action is determined as the temperature rise sensitive stress action data to analyze the temperature rise sensitivity habit of the user and estimate the charging temperature rise sensitive threshold of the user in subsequent charging. If the current charging action does not belong to the temperature rise sensitive stress action, a subsequent charging action of the terminal is continuously monitored to determine whether the current charging action including the subsequent charging action meets the temperature rise sensitive stress action.

In an implementation, the current charging action data includes at least one of the initial electric quantity, the termination electric quantity, the charging duration, the termination temperature, the temperature rise magnitude, and a first maximum temperature. The first maximum temperature is a maximum temperature reached during the current charging action of the terminal.

In an implementation, the current charging action data includes the initial electric quantity, the termination electric quantity, the charging duration, the termination temperature, the temperature rise magnitude, and the first maximum temperature; the determining whether the current charging action belongs to the temperature rise sensitive stress action according to the current charging action data of the terminal includes: determining that the current charging action belongs to the temperature rise sensitive stress action, if the current charging action data of the terminal meets following conditions: the initial electric quantity is less than or equal to a preset electric quantity (for example, 70%); the termination electric quantity is less than a full electric quantity of the terminal (for example, 100%); the charging duration is longer than or equal to a preset duration (for example, 8 minutes); the temperature rise magnitude is greater than or equal to a preset magnitude (for example, 3°C); the first maximum temperature is higher than or equal to a first preset temperature threshold (for example, 39°C); a difference between the first maximum temperature and the termination temperature is less than or equal to a second preset temperature threshold (for example, 2°C).

In an embodiment, the temperature rise sensitive stress action data in the historical charging action data may be stored in a database, so that it is convenient to judge whether the data stored in the database meets the entry-into-force condition of the temperature rise sensitivity habit, and it is convenient to call the data to analyze the temperature rise sensitivity habit of the user. The temperature rise sensitive stress action data is shown in the following table:

| Nu mbe r | Charging date | Initial electric quantity | Terminati on electric quantity | Charging duration | Initial temper ature | Termin ation tempera ture | Second maximum temperature | Temperatu re rise magnitude |
|---|---|---|---|---|---|---|---|---|
| 1 | 2023.2.1 | 10% | 40% | 15min | 33.5°C | 39°C | 39°C | 5.5°C |
| 2 | 2023.2.1 | 35% | 70% | 20min | 35°C | 41°C | 41°C | 6°C |
| 3 | 2023.2.2 | 25% | 80% | 22min | 33°C | 38°C | 40°C | 7°C |
| 4 | 2023.2.4 | 40% | 55% | 30min | 32°C | 43°C | 44°C | 12°C |
| 5 | 2023.2.5 | 60% | 90% | 20min | 36.5°C | 39°C | 40.5°C | 4°C |
| 6 | 2023.2.7 | 20% | 65% | 40min | 29°C | 44.6°C | 45°C | 16°C |

It should be understood that the above table is only an example, and the data in the table is independent from each other, which does not limit the technical solution of the present invention.

Moreover, the historical charging action is a charging action of the user on the terminal in a time period, and when the time period is updated or the database is saturated, the temperature rise sensitive stress action data can be updated by means of up rolling, covering, or the like.

Additionally, the temperature rise sensitive stress action data includes the initial temperature and a second maximum temperature. The second maximum temperature is a maximum temperature reached during the historical charging action of the terminal. In this case, the charging temperature rise sensitive threshold of the user of the terminal can be estimated in various ways according to the temperature rise sensitive stress action data.

In an implementation, the temperature rise sensitive stress action data includes the second maximum temperature; the estimating the charging temperature rise sensitive threshold of the user of the terminal according to the temperature rise sensitive stress action data includes: determining an average value of the second maximum temperatures in every temperature rise sensitive stress action data as the charging temperature rise sensitive threshold.

In an embodiment of the present invention, taking the temperature rise sensitive stress action data in the above table as an example, an average value (39°C+41°C+40°C+44°C+40.5°C+45°C)/6=41.6°C of the second maximum temperatures in the 6 pieces of temperature rise sensitive stress action data is determined as the charging temperature rise sensitive threshold.

In an implementation, the temperature rise sensitive stress action data includes the second maximum temperature; the estimating the charging temperature rise sensitive threshold of the user of the terminal according to the temperature rise sensitive stress action data includes: dividing the second maximum temperatures in every temperature rise sensitive stress action data into a plurality of first intervals; and determining a median value of the second maximum temperatures falling in a first target interval as the charging temperature rise sensitive threshold. The first target interval is an interval of the plurality of first intervals including the most second maximum temperatures.

In an embodiment of the present invention, taking the temperature rise sensitive stress action data in the above table as an example, the second maximum temperatures of the above 6 pieces of temperature rise sensitive stress action data are divided into intervals of 2°C to obtain three first intervals including [39°C, 41°C), [41°C, 43°C), and [43°C, 45°C]. The second maximum temperatures falling within the range of [39°C, 41°C) include 39°C, 40°C, and 40.5°C, the second maximum temperature falling within the range of [41°C, 43°C) includes 41°C, and the second maximum temperatures falling within the range of [43°C, 45°C] include 44°C and 45°C. In this case, the number of the second maximum temperatures falling within the range of [39°C, 41°C) is greatest. That is, the first target interval is [39°C, 41°C). Therefore, the median value of the second maximum temperatures falling within the first target interval of [39°C, 41°C), i.e., the median value of 40°C of 39°C, 40°C and 40.5°C, may be determined as the charging temperature rise sensitive threshold.

In an implementation, the temperature rise sensitive stress action data includes the initial temperature and the second maximum temperature; the estimating the charging temperature rise sensitive threshold of the user of the terminal according to the temperature rise sensitive stress action data includes: dividing the initial temperatures in every temperature rise sensitive stress action data into a plurality of second intervals; and determining an average value of the second maximum temperatures in target temperature rise sensitive stress action data as the charging temperature rise sensitive threshold. The target temperature rise sensitive stress action data is the temperature rise sensitive stress action data with the initial temperature falling in a second target interval, and the second target interval is an interval of the plurality of second intervals including an initial temperature of the current charging action of the terminal.

In an embodiment of the present invention, taking the temperature rise sensitive stress action data in the above table as an example, the initial temperatures of the 6 pieces of temperature rise sensitive stress action data are divided into intervals of 2°C to obtain four second intervals including [29°C, 31°C), [31°C, 33°C), [33°C, 35°C), and [35°C, 37°C], and the initial temperature of the current charging action is 30°C which falls within the range of [29°C, 31°C), that is, the second target interval is [29°C, 31°C). The initial temperature falling within [29°C, 31°C) includes 29°C, and therefore, the target temperature rise sensitive stress action data is the data with the number 6 in the above table. In this case, the second maximum temperature of 45°C in the target temperature rise sensitive stress action data may be determined as the charging temperature rise sensitive threshold.

In an implementation, the step S102 may include: determining a maximum temperature threshold of the current charging action according to the charging temperature rise sensitive threshold; and updating a charging strategy of the terminal according to the maximum temperature threshold, and adjusting the charging temperature rise of the terminal according to the updated charging strategy.

In an embodiment of the present invention, after the charging temperature rise sensitive threshold is estimated, the maximum temperature threshold of the current charging action may be further determined according to the charging temperature rise sensitive threshold. For example, the maximum temperature threshold is set as a difference between the charging temperature rise sensitive threshold and a temperature difference margin (1°C or 0.5°C), and the temperature difference margin is greater than 0°C. The maximum temperature threshold is a threshold for the current charging action to trigger the temperature rise adjustment, and therefore, after the maximum temperature threshold is determined, the maximum temperature threshold may be updated to the charging strategy of the terminal, so as to realize the charging temperature rise adjustment of the terminal. The maximum temperature threshold is less than the charging temperature rise sensitive threshold, and when the temperature of the terminal reaches the maximum temperature threshold, the temperature rise adjustment is performed on the terminal in advance to prevent the temperature of the terminal from reaching the charging temperature rise sensitive threshold during the charging temperature rise adjustment as far as possible and improve the charging experience of the user.

Furthermore, in the present invention, the charging strategy of the terminal may be updated in various ways. In an implementation, a maximum charging power (i.e., a charging power limit) of the terminal may be updated according to a difference between the maximum temperature threshold and an original maximum temperature threshold in the charging strategy.

In the present invention, an original charging strategy of the terminal may include a correspondence relationship between the maximum temperature and the maximum charging power. In the correspondence relationship, the greater the maximum temperature, the greater the corresponding maximum charging power. For example, the maximum charging power corresponding to the maximum temperature of 36°C is 86W, and a current value of the maximum charging power corresponding to the maximum temperature of 34°C is 80W.

A positive difference between the maximum temperature threshold and the original maximum temperature threshold indicates that a temperature rise condition of the original charging strategy can meet the temperature rise sensitivity of the current user, and the original maximum charging power is kept unchanged. A negative difference between the maximum temperature threshold and the original maximum temperature threshold indicates that the temperature rise condition of the original charging strategy cannot meet the temperature rise sensitivity of the current user, so that the user tends to generate the temperature rise sensitive stress action, and the charging experience of the user is affected. In this case, it is necessary to be first determined whether a current maximum temperature threshold exists in the above correspondence relationship. If the current maximum temperature threshold exists in the above correspondence relationship, the maximum charging power corresponding to the current maximum temperature threshold in the correspondence relationship is determined as a new maximum charging power, and the new maximum charging power is updated to the charging strategy of the terminal. If the current maximum temperature threshold does not exist in the above correspondence relationship, the maximum charging power corresponding to a target maximum temperature in the above correspondence relationship is determined as a new maximum charging power, and the new maximum charging power is updated into the charging strategy of the terminal. The target maximum temperature is the maximum temperature in the above correspondence relationship, which has a smallest difference with the current maximum temperature threshold and is less than the current maximum temperature threshold. In this way, the adjusted maximum charging power is less than the original maximum charging power, so as to prevent the temperature of the terminal from being excessively high, and realize the charging temperature rise adjustment of the terminal.

In another implementation, a current division ratio of each charging channel in the terminal may be updated according to the maximum temperature threshold.

In the present invention, a plurality of charging channels are included in the terminal, and the greater a current flowing through the charging channel, the more the generated heat, which in turn causes the temperature rise of the terminal. The temperature rise condition of the terminal can be adjusted by adjusting current values of the respective charging channels.

Specifically, a new current division ratio may be calculated according to current temperatures of the charging channels, an actual distribution of the charging channels in the terminal, or the like, so that when the charging channels work according to the new current division ratio, the temperature of the terminal is less than or equal to the maximum temperature threshold, and the charging strategy is updated according to the new current division ratio, that is, the temperature of each charging channel is adjusted by adjusting the current of the charging channel, so as to adjust the charging temperature rise of the terminal.

In yet another implementation, a working mode of a charging chip of each charging channel in the terminal may be updated according to the maximum temperature threshold.

Specifically, the charging channel of the terminal includes a plurality of charging chips, the charging chip includes working modes with different energy consumptions. When the charging chip is in a working mode with a higher energy consumption, more heat is generated, so that the temperature of the charging channel where the charging chip is located is increased, and then, the temperature of the terminal is increased. In this case, the working mode of each charging chip may be re-determined according to the maximum temperature threshold, so that when each charging chip works according to the new working mode, the temperature of the terminal is less than or equal to the maximum temperature threshold, and the charging strategy is updated according to the new working mode of each charging chip, so as to realize more refined charging temperature rise adjustment of the terminal.

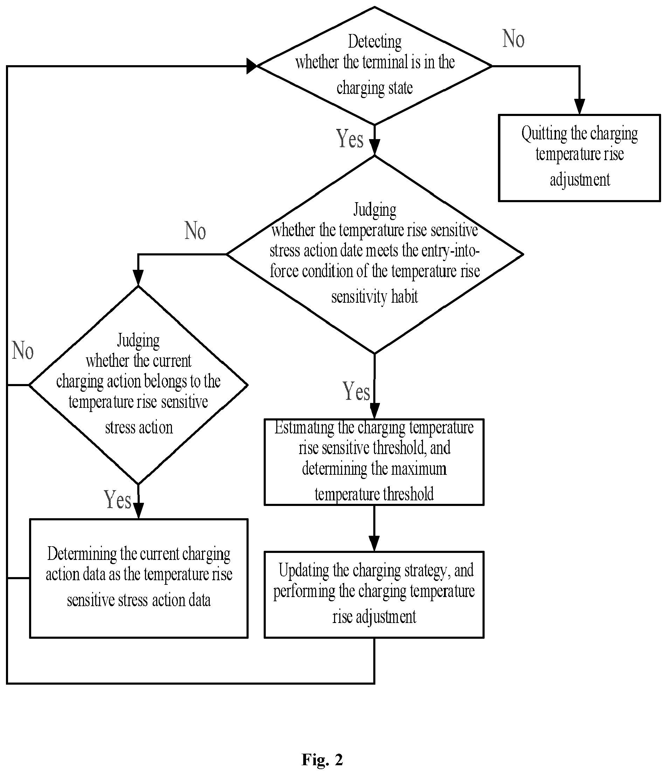

In a possible implementation, as shown in Fig. 2, it is detected whether the terminal is in the charging state; when it is detected that the terminal is in the charging state, it is first judged whether the temperature rise sensitive stress action data in the historical charging action data meets the entry-into-force condition of the temperature rise sensitivity habit, and if the entry-into-force condition is met, the charging temperature rise sensitive threshold of the user of the terminal is estimated according to the temperature rise sensitive stress action data; if the entry-into-force condition is not met, it is judged whether the current charging action belongs to the temperature rise sensitive stress action according to the current charging action data of the terminal; if the current charging action belongs to the temperature rise sensitive stress action, the current charging action data is determined as the temperature rise sensitive stress action data, and then, it is continuously detected whether the terminal is in the charging state; and if the current charging action does not belong to the temperature rise sensitive stress action, it is continuously detected whether the terminal is in the charging state.

After the charging temperature rise sensitive threshold is obtained, the maximum temperature threshold of the current charging action is determined according to the charging temperature rise sensitive threshold, and then, the charging strategy of the terminal is updated according to the maximum temperature threshold, and the charging temperature rise adjustment is carried out on the terminal according to the updated charging strategy.

In addition, after the terminal gets into the charging temperature rise adjustment, can it may be continuously detected whether the terminal is in the charging state, and if it is detected that the terminal is not in the charging state, that is, the charging connection of the terminal is broken or the terminal realizes charging saturation (that is, being fully charged), the charging temperature rise adjustment function may be quit. Furthermore, a user interface dialog box may be provided for the user to autonomously select entry or exit from the charging temperature rise adjustment function (not shown in Fig. 2).

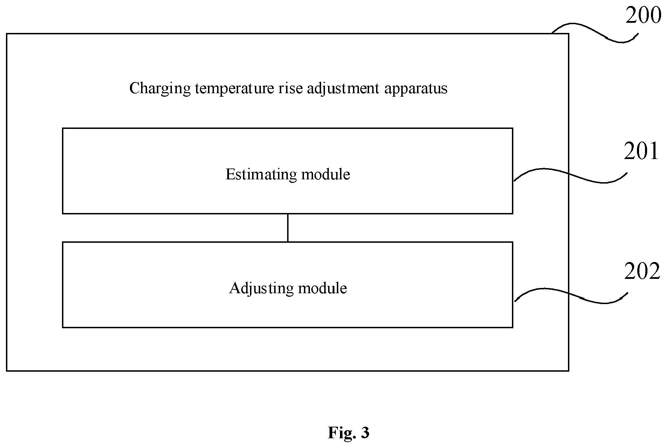

Fig. 3 shows a block diagram of a charging temperature rise adjustment apparatus according to an illustrative embodiment. Referring to Fig. 3, the charging temperature rise adjustment apparatus 200 includes an estimating module 201 and an adjusting module 202.

The estimating module 201 is configured to, in response to detecting that a terminal is in a charging state, estimate a charging temperature rise sensitive threshold of a user of the terminal according to historical charging action data of the terminal.

The adjusting module 202 is configured to adjust a charging temperature rise of the terminal according to the charging temperature rise sensitive threshold.

In some embodiments, the historical charging action data includes temperature rise sensitive stress action data.

In some embodiments, the estimating module 201 includes: a habit effecting judging submodule configured to determine whether the temperature rise sensitive stress action data meets an entry-into-force condition of a temperature rise sensitivity habit; and a threshold estimating submodule configured to, if the temperature rise sensitive stress action data meets the entry-into-force condition, estimate the charging temperature rise sensitive threshold of the user of the terminal according to the temperature rise sensitive stress action data.

In some embodiments, the estimating module 201 further includes: a stress action judging submodule configured to, if the temperature rise sensitive stress action data does not meet the entry-into-force condition, determine whether a current charging action belongs to a temperature rise sensitive stress action according to current charging action data of the terminal; and a stress action data determining submodule configured to, if the current charging action belongs to the temperature rise sensitive stress action, determine the current charging action data as the temperature rise sensitive stress action data.

In some embodiments, the current charging action data includes at least one of an initial electric quantity, a termination electric quantity, a charging duration, a termination temperature, a temperature rise magnitude, and a first maximum temperature.

In some embodiments, the current charging action data includes the initial electric quantity, the termination electric quantity, the charging duration, the termination temperature, the temperature rise magnitude, and the first maximum temperature. The stress action judging submodule is configured to determine that the current charging action belongs to the temperature rise sensitive stress action, if the current charging action data of the terminal meets the following conditions: the initial electric quantity is less than or equal to a preset electric quantity; the termination electric quantity is less than a full electric quantity of the terminal; the charging duration is longer than or equal to a preset duration; the temperature rise magnitude is greater than or equal to a preset magnitude; the first maximum temperature is higher than or equal to a first preset temperature threshold; a difference between the first maximum temperature and the termination temperature is less than or equal to a second preset temperature threshold.

In some embodiments, the temperature rise sensitive stress action data includes a second maximum temperature. The threshold estimating submodule includes: a first estimating submodule configured to determine an average value of the second maximum temperatures in every temperature rise sensitive stress action data as the charging temperature rise sensitive threshold.

In some embodiments, the temperature rise sensitive stress action data includes a second maximum temperature. The threshold estimating submodule includes: a first interval dividing submodule configured to divide the second maximum temperatures in every temperature rise sensitive stress action data into a plurality of first intervals; and a second estimating submodule configured to determine a median value of the second maximum temperatures falling in a first target interval as the charging temperature rise sensitive threshold. The first target interval is an interval of the plurality of first intervals including the most second maximum temperatures.

In some embodiments, the temperature rise sensitive stress action data includes an initial temperature and a second maximum temperature. The threshold estimating submodule includes: a second interval dividing submodule configured to divide the initial temperatures in every temperature rise sensitive stress action data into a plurality of second intervals; and a third estimating submodule configured to determine an average value of the second maximum temperatures in target temperature rise sensitive stress action data as the charging temperature rise sensitive threshold. The target temperature rise sensitive stress action data is the temperature rise sensitive stress action data with the initial temperature falling in a second target interval, and the second target interval is an interval of the plurality of second intervals including an initial temperature of the current charging action of the terminal.

In some embodiments, the adjusting module 202 includes: a threshold determining submodule configured to determine a maximum temperature threshold of the current charging action according to the charging temperature rise sensitive threshold; and an adjusting submodule configured to update a charging strategy of the terminal according to the maximum temperature threshold, and adjust the charging temperature rise of the terminal according to the updated charging strategy.

In some embodiments, the adjusting submodule includes one of: a first updating submodule configured to update a maximum charging power of the terminal according to a difference between the maximum temperature threshold and an original maximum temperature threshold in the charging strategy; a second updating submodule configured to update a current division ratio of each charging channel in the terminal according to the maximum temperature threshold; and a third updating submodule configured to update a working mode of a charging chip of each charging channel in the terminal according to the maximum temperature threshold.

With regard to the apparatus according to the above embodiments, a specific manner in which each module performs an operation is described in detail in the embodiments of the method, and will not be described in detail here.

With the above description, it can be easily found that, in the embodiments of the present invention, by carrying out temperature rise sensitivity learning on the charging action of the user on the terminal and the temperature rise condition of the terminal in a period of time, the charging temperature rise sensitive threshold of the user is estimated, and then, the charging temperature rise adjustment is performed on the current charging action of the terminal, so that the charging temperature rise condition of the terminal satisfies the charging temperature rise expectation of the user, thus improving the user's charging experience and the user's usage experience of the terminal.

The present invention further provides a computer-readable storage medium having computer program instructions stored thereon, and the program instructions, when executed by a processor, implement the steps of the charging temperature rise adjustment method according to the present invention.

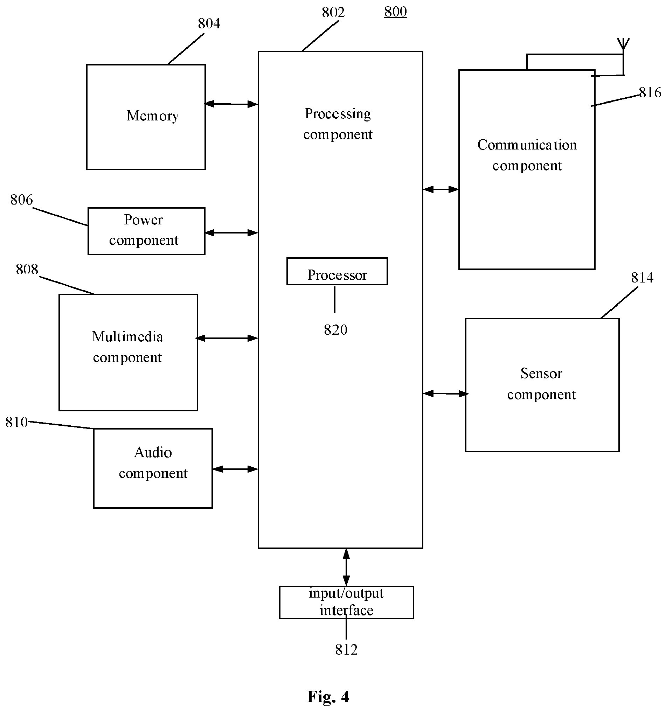

Fig. 4 shows a block diagram of a charging temperature rise adjustment apparatus 800 according to an illustrative embodiment. For example, the apparatus 800 may be a mobile phone, a computer, a digital broadcast terminal, a messaging device, a game console, a tablet device, a medical device, an exercise device, a personal digital assistant, or the like.

Referring to FIG. 4, the apparatus 800 may include one or more of the following components: a processing component 802, a memory 804, a power component 806, a multimedia component 808, an audio component 810, an input/output interface 812, a sensor component 814, and a communication component 816.

The processing component 802 usually controls overall operations of the apparatus 800, such as operations associated with display, telephone calls, data communication, camera operations, and recording operations. The processing component 802 may include one or more processors 820 to execute instructions to perform all or a part of the steps of the above charging temperature rise adjustment method. Furthermore, the processing component 802 may include one or more modules facilitating interaction between the processing component 802 and other components. For example, the processing component 802 may include a multimedia module to facilitate interaction between the multimedia component 808 and the processing component 802.

The memory 804 is configured to store various types of data to support the operations at the apparatus 800. Examples of such data include instructions for any application or method operating on the apparatus 800, contact data, telephone book data, messages, pictures, videos, or the like. The memory 804 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power for the various components of the apparatus 800. The power component 806 may include a power management system, one or more power sources, and other components associated with generation, management, and distribution of power for the apparatus 800.

The multimedia component 808 includes a screen providing an output interface between the apparatus 800 and a user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense a touch, a slide, and gestures on the touch panel. The touch sensor may not only sense a boundary of a touch or slide action, but also detect the duration and pressure associated with a touch or slide operation. In some embodiments, the multimedia component 808 includes a front camera and/or a rear camera. The front camera and/or the rear camera may receive external multimedia data when the apparatus 800 is in an operational mode, such as a shooting mode or a video mode. Each of the front camera and the rear camera may be a fixed optical lens system or have a focal length and an optical zoom capability.

The audio component 810 is configured to output and/or input audio signals. For example, the audio component 810 includes a microphone (MIC) configured to receive external audio signals when the apparatus 800 is in an operational mode, such as a call mode, a recording mode, and a voice recognition mode. The received audio signal may be further stored in the memory 804 or transmitted by the communication component 816. In some embodiments, the audio component 810 further includes a loudspeaker for outputting audio signals.

The input/output interface 812 provides an interface between the processing component 802 and peripheral interface modules which may be keyboards, click wheels, buttons, or the like. These buttons may include, but are not limited to, a home button, a volume button, a start button, and a lock button.

The sensor component 814 includes one or more sensors for providing various aspects of state assessments for the apparatus 800. For example, the sensor component 814 may detect an open/closed state of the apparatus 800, and relative positioning of components, such as a display and a keypad of the apparatus 800. The sensor component 814 may also detect a change in a position of the apparatus 800 or one component of the apparatus 800, presence or absence of contact between the user and the apparatus 800, an orientation or acceleration/deceleration of the apparatus 800, and a change in a temperature of the apparatus 800. The sensor component 814 may include a proximity sensor configured to detect presence of a nearby object in the absence of any physical contact. The sensor component 814 may also include a light sensor, such as a CMOS or CCD image sensor, for use in imaging applications. In some embodiments, the sensor component 814 may further include an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as Wi-Fi, 2G, or 3G, or a combination thereof. In an illustrative embodiment, the communication component 816 receives broadcast signals or broadcast related information from an external broadcast management system via a broadcast channel. In an illustrative embodiment, the communication component 816 further includes a near field communication (NFC) module to facilitate short-range communication. For example, the NFC module may be implemented based on a radio frequency identification (RFID) technology, an infrared data association (IrDA) technology, an ultra wide band (UWB) technology, a Bluetooth (BT) technology, and other technologies.

In an illustrative embodiment, the charging temperature rise adjustment apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above charging temperature rise adjustment method.

An illustrative embodiment further provides a non-transitory computer-readable storage medium including instructions, such as the memory 804 including instructions, and the instructions are executable by the processor 820 of the charging temperature rise adjustment apparatus 800 to perform the above charging temperature rise adjustment method. For example, the non-transitory computer-readable storage medium may be a ROM, a random access memory (RAM), a CD-ROM, a magnetic tape, a floppy disk, an optical data storage device, or the like.

In another illustrative embodiment, there is further provided a computer program product, which includes a computer program executable by a programmable apparatus, and the computer program has a code portion for performing the above charging temperature rise adjustment method when executed by the programmable apparatus.

## Claims

1. A charging temperature rise adjustment method, comprising:
in response to detecting that a terminal is in a charging state, estimating (S101) a charging temperature rise sensitive threshold of a user of the terminal according to historical charging action data of the terminal; and
adjusting (S102) a charging temperature rise of the terminal according to the charging temperature rise sensitive threshold.

2. The method according to claim 1, wherein the historical charging action data comprises temperature rise sensitive stress action data.

3. The method according to claim 2, wherein the estimating (S101) the charging temperature rise sensitive threshold of the user of the terminal according to the historical charging action data of the terminal comprises:
determining whether the temperature rise sensitive stress action data meets an entry-into-force condition of a temperature rise sensitivity habit; and
in response to determining that the temperature rise sensitive stress action data meets the entry-into-force condition, estimating the charging temperature rise sensitive threshold of the user of the terminal according to the temperature rise sensitive stress action data.

4. The method according to claim 3, wherein the estimating (S101) the charging temperature rise sensitive threshold of the user of the terminal according to the historical charging action data of the terminal further comprises:
in response to determining that the temperature rise sensitive stress action data does not meet the entry-into-force condition, determining whether a current charging action belongs to a temperature rise sensitive stress action according to current charging action data of the terminal; and
in response to determining that the current charging action belongs to the temperature rise sensitive stress action, determining the current charging action data as the temperature rise sensitive stress action data.

5. The method according to claim 4, wherein the current charging action data comprises at least one of an initial electric quantity, a termination electric quantity, a charging duration, a termination temperature, a temperature rise magnitude, and a first maximum temperature.

6. The method according to claim 4 or 5, wherein the current charging action data comprises an initial electric quantity, a termination electric quantity, a charging duration, a termination temperature, a temperature rise magnitude, and a first maximum temperature;
the determining whether the current charging action belongs to the temperature rise sensitive stress action according to the current charging action data of the terminal comprises:
determining that the current charging action belongs to the temperature rise sensitive stress action, in response to determining that the current charging action data of the terminal meets the following conditions:
the initial electric quantity is less than or equal to a preset electric quantity;
the termination electric quantity is less than a full electric quantity of the terminal;
the charging duration is longer than or equal to a preset duration;
the temperature rise magnitude is greater than or equal to a preset magnitude;
the first maximum temperature is higher than or equal to a first preset temperature threshold; and
a difference between the first maximum temperature and the termination temperature is less than or equal to a second preset temperature threshold.

7. The method according to any one of claims 3 to 6, wherein the temperature rise sensitive stress action data comprises a second maximum temperature;
the estimating the charging temperature rise sensitive threshold of the user of the terminal according to the temperature rise sensitive stress action data comprises:
determining an average value of the second maximum temperatures in every temperature rise sensitive stress action data as the charging temperature rise sensitive threshold.

8. The method according to any one of claims 3 to 7, wherein the temperature rise sensitive stress action data comprises a second maximum temperature;
the estimating the charging temperature rise sensitive threshold of the user of the terminal according to the temperature rise sensitive stress action data comprises:
dividing the second maximum temperatures in every temperature rise sensitive stress action data into a plurality of first intervals; and
determining a median value of the second maximum temperatures falling in a first target interval as the charging temperature rise sensitive threshold, wherein the first target interval is an interval of the plurality of first intervals comprising the most second maximum temperatures.

9. The method according to any one of claims 3 to 8, wherein the temperature rise sensitive stress action data comprises an initial temperature and a second maximum temperature;
the estimating the charging temperature rise sensitive threshold of the user of the terminal according to the temperature rise sensitive stress action data comprises:
dividing the initial temperatures in every temperature rise sensitive stress action data into a plurality of second intervals; and
determining an average value of the second maximum temperatures in target temperature rise sensitive stress action data as the charging temperature rise sensitive threshold, wherein the target temperature rise sensitive stress action data is the temperature rise sensitive stress action data with the initial temperature falling in a second target interval, and the second target interval is an interval of the plurality of second intervals comprising an initial temperature of a current charging action of the terminal.

10. The method according to any one of claims 1 to 9, wherein the adjusting (S102) the charging temperature rise of the terminal according to the charging temperature rise sensitive threshold comprises:
determining a maximum temperature threshold of a current charging action according to the charging temperature rise sensitive threshold; and
updating a charging strategy of the terminal according to the maximum temperature threshold, and adjusting the charging temperature rise of the terminal according to the updated charging strategy.

11. The method according to claim 10, wherein the updating the charging strategy of the terminal according to the maximum temperature threshold comprises one of:
updating a maximum charging power of the terminal according to a difference between the maximum temperature threshold and an original maximum temperature threshold in the charging strategy;
updating a current division ratio of each charging channel in the terminal according to the maximum temperature threshold; and
updating a working mode of a charging chip of each charging channel in the terminal according to the maximum temperature threshold.

12. A charging temperature rise adjustment apparatus (800), comprising:
a processor (820); and
a memory (804) for storing instructions executable by the processor (820),
wherein the processor (820) is configured to run the executable instructions to implement steps of a charging temperature rise adjustment method according to any one of claims 1 to 11.

13. A computer-readable storage medium having computer program instructions stored thereon, wherein when executed by a processor (820), the program instructions are configured to implement steps of a charging temperature rise adjustment method according to any one of claims 1 to 11.
